# EUROPEAN PATENT APPLICATION

(11) **EP 4 749 697 A1**
(43) Date of publication of application: **27.05.2026**
(21) Application number: 25216867.9
(22) Date of filing: 19.11.2025
(51) Int. Cl.: H01M 4/04, H01M 4/131, H01M 4/1391, H01M 4/525, H01M 4/62, H01M 10/052

(54) **POSITIVE ELECTRODE SLURRY COMPOSITION, POSITIVE ELECTRODE, MANUFACTURING METHOD THEREOF, AND RECHARGEABLE LITHIUM BATTERIES**

(30) Priority: 22.11.2024 KR 20240168847
(71) Applicant: SAMSUNG SDI CO., LTD., Yongin-si, Gyeonggi-do 17084 (KR); POSTECH Research and Business Development Foundation, Pohang-si, Gyeongsangbuk-do 37673 (KR)
(72) Inventor: Shin, Dongwook, Yongin-si, Gyeonggi-do 17084 (KR); Park, Kyu-Young, Pohang-si, Gyeongsangbuk-do 37673 (KR); Park, Seongeun, Pohang-si, Gyeongsangbuk-do 37673 (KR); Do, Byunghyun, Pohang-si, Gyeongsangbuk-do 37673 (KR)
(74) Representative: Meissner Bolte Partnerschaft mbB

(57) **Abstract**

A positive electrode slurry composition, a positive electrode, a manufacturing method thereof, and a rechargeable lithium battery. The positive electrode slurry composition includes a positive electrode active material including secondary particles of a lithium nickel-based composite oxide, carbon nanotubes, and a cellulose-based additive.

## Description

### BACKGROUND

### 1. Field

The present disclosure relates to positive electrode slurry compositions, positive electrodes, manufacturing methods thereof, and rechargeable lithium batteries.

The present disclosure is related to research conducted with the support of the Korea Institute for Advancement of Technology (RS-2024-00419413, 2024 Industrial Innovation Talent Growth Support Project) with funding from the Republic of Korea government (Ministry of Trade, Industry and Energy) in 2024.

### 2. Description of the Related Art

A portable information device, such as a cell phone, a laptop, smart phone, or an electric vehicle, typically uses a rechargeable lithium battery as a driving power source. The rechargeable lithium battery has a relatively high energy density and is portable. Research is being actively conducted utilizing rechargeable lithium batteries with relatively high energy density as power sources for driving or energy storage in hybrid or electric vehicles.

Various positive electrode active materials have been investigated. Among them, lithium nickel-based oxide, lithium nickel manganese cobalt-based composite oxide, lithium nickel cobalt aluminum-based composite oxide, and lithium cobalt-based oxide have been main candidates. High nickel content positive electrode active materials having a nickel content of approximately equal to or greater than 80 mol% may provide such a relatively high energy density and therefore have been actively developed. However, there are limitations such as structural deterioration due to charging and discharging, surface side reactions with the electrolyte, and deterioration due to particle cracks. Accordingly, there is a need to develop a positive electrode active material that implements such a relatively high energy density and has a relatively long cycle-life.

This Background section is for the general understanding of the background of the present disclosure, and therefore, it may contain information that does not constitute related (or prior) art.

### SUMMARY

The dispersibility of carbon nanotube is improved by adding a cellulose-based additive to a positive electrode slurry composition, so that even when drying is performed during manufacturing the positive electrode, it may suppress carbon nanotubes from being agglomerated in a certain part of the positive electrode and potentially forming a carbon nanotube film. The carbon nanotubes can be uniformly dispersed within the positive electrode, and can be selectively and uniformly coated on the surface of the positive electrode active material during manufacturing of the positive electrode without separately coating the carbon nanotube on the positive electrode active material.

The present invention provides a positive electrode slurry composition including a positive electrode active material including secondary particles of a lithium nickel-based composite oxide, carbon nanotube, and a cellulose-based additive.

The present invention also provides a positive electrode slurry composition including: a positive electrode active material comprising secondary particles of a lithium nickel-based composite oxide; carbon nanotubes; and a cellulose-based additive.

In some embodiments, the lithium nickel-based composite oxide is represented by Chemical Formula 1:

[Chemical Formula 1] Liₐ₁Niₓ₁M¹_{y1}M²_{z1}O_{2-b1}X_{b1}

wherein, 0.9≤a1≤1.2, 0.8≤x1<1, 0<y1≤0.2, 0≤z1≤0.2, 0.9≤x1+y1+z1≤1.1, and 0≤b1≤0.1, wherein M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and wherein X is one or more elements selected from F, P, and S.

In some embodiments, the lithium nickel-based composite oxide has a nickel content equal to or greater than about 80 mol% based on 100 mol% of a total metal other than lithium.

In some embodiments, a plurality of primary particles are agglomerated in the secondary particles and an average particle diameter (D₅₀) of the secondary particles is about 2 µm to about 20 µm, and wherein an average particle diameter (D₅₀) of the primary particles is less than or equal to about 6 µm.

In some embodiments, the carbon nanotubes include single-walled carbon nanotubes, multi-walled carbon nanotubes, or a combination thereof.

In some embodiments, an average diameter of the carbon nanotubes is about 0.8 nm to about 100 nm, and wherein an average aspect ratio of the carbon nanotubes is about 100 to about 500,000.

In some embodiments, the cellulose-based additive comprises ethyl cellulose, cellulose acetate, carboxylmethyl cellulose, hydroxypropyl cellulose, methyl cellulose, nitrocellulose, or a combination thereof.

In some embodiments, a content of the lithium nickel-based composite oxide is about 90 wt% to about 99 wt% based on 100 wt% of a total solid content of the positive electrode slurry composition, wherein a content of the carbon nanotubes is about 0.1 wt% to about 5 wt% based on 100 wt% of the total solid content of the positive electrode slurry composition, and wherein a content of the cellulose-based additive is about 0.01 wt% to about 5 wt% based on 100 wt% of the total solid content of the positive electrode slurry composition.

In some embodiments, a weight ratio of the carbon nanotubes to the cellulose-based additive is about 10:1 to about 1:5.

In some embodiments, the positive electrode slurry composition further includes a binder, a conductive material, or a combination thereof.

The present invention also provides a positive electrode including a positive electrode current collector; and a positive electrode active material layer which is disposed on the positive electrode current collector and includes positive electrode active material including a lithium nickel-based composite oxide in a form of secondary particles in which a plurality of primary particles is agglomerated, and carbon nanotube.

The present invention further provides a positive electrode, including: a positive electrode current collector; and a positive electrode active material layer disposed on the positive electrode current collector and including: a positive electrode active material including secondary particles of a lithium nickel-based composite oxide; carbon nanotubes; and a cellulose derivative, amorphous carbon, or a combination thereof.

The present invention also provides a method of manufacturing a positive electrode which includes: preparing a positive electrode slurry composition including a positive electrode active material including secondary particles of lithium nickel-based composite oxide, carbon nanotubes, and a cellulose-based additive; coating the positive electrode slurry composition onto the positive electrode current collector and drying the same; and performing heat treatment.

The present invention further provides a method of manufacturing a positive electrode, including: preparing a positive electrode slurry composition including a positive electrode active material including secondary particles of a lithium nickel-based composite oxide, carbon nanotubes, and a cellulose-based additive; coating the positive electrode slurry composition onto a positive electrode current collector and drying the positive electrode slurry composition; and performing heat treatment.

In some embodiments, the preparing the positive electrode slurry composition includes: mixing the secondary particles of the lithium nickel-based composite oxide, the carbon nanotubes, and the cellulose-based additive in a solvent.

In some embodiments the preparing the positive electrode slurry composition includes; adding the carbon nanotubes and the cellulose-based additive in a solvent to form a pre-dispersion, and adding the pre-dispersion to a slurry comprising the secondary particles of the lithium nickel-based composite oxide.

In some embodiments, the drying is performed at a temperature of about 60 °C to about 160 °C.

In some embodiments, the heat treatment is performed at a temperature of about 180 °C to about 300 °C.

In some embodiments, the heat treatment is performed for about 10 to about 60 minutes.

In some embodiments, the heat treatment is performed under vacuum or under an atmosphere comprising a gas.

In some embodiments, the gas includes oxygen, argon, air, or nitrogen.

The present invention further provides a rechargeable lithium battery including the positive electrode, a negative electrode, and an electrolyte.

The present invention also provides a rechargeable lithium battery, including: the positive electrode; a negative electrode; and an electrolyte.

The positive electrode slurry composition improves the dispersibility of carbon nanotube by adding a cellulose-based additive, thereby suppressing the carbon nanotubes from being agglomerated in a certain part of the positive electrode and potentially forming a carbon nanotube film even when drying is performed during manufacturing of the positive electrode. The carbon nanotubes may be selectively and uniformly coated on the surface of a positive electrode active material during manufacturing of the positive electrode without separately coating the carbon nanotube on the positive electrode active material.

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings.
FIG. 1 schematically shows a rechargeable lithium battery according to embodiments of the present disclosure.
FIG. 2 schematically shows a rechargeable lithium battery according to embodiments of the present disclosure.
FIG. 3 schematically shows a rechargeable lithium battery according to embodiments of the present disclosure.
FIG. 4 schematically shows a rechargeable lithium battery according to embodiments of the present disclosure.
FIG. 5 is a photograph of samples manufactured showing the dispersibility of carbon nanotubes depending on the presence or absence of a cellulose-based additive, taken using a scanning electron microscope (SEM) according to embodiments of the present disclosure.
FIG. 6 is a photograph showing the surface of the positive electrode of Example 1 and Reference Example 1, taken using an SEM according to embodiments of the present disclosure.
FIG. 7 is a photograph showing the cross-section of the positive electrode of Example 2 and Reference Example 2, taken using an SEM according to embodiments of the present disclosure.
FIG. 8 is a photograph showing the adhesive forces of carbon nanotubes using solutions in which positive electrode active materials were extracted from positive electrodes manufactured in Example 1 and Reference Example 3. Each was added to an N-methyl-2-pyrrolidone solvent, and ultrasonic treatment was performed in an ultrasonic processor for 0 minutes, 1 minute, 3 minutes, and 5 minutes according to embodiments of the present disclosure.
FIG. 9 is a graph showing the cycle-life of the rechargeable lithium battery cells manufactured in Example 1, Reference Example 3, and Comparative Examples 1 and 2 according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

As used herein, "combination thereof" may refer to a mixture, a laminate, a composite, a copolymer, an alloy, a blend, or a reaction product, of the constituents.

In the drawings, the thickness of layers, films, panels, regions, etc., are exaggerated for clarity. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, the term "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

As used herein, the term "metal" refers to ordinary metals, transition metals and metalloids (semi-metals).

The terms used in the present specification are for describing embodiments of the present disclosure and are not intended to limit the present disclosure.

As used herein, the term "primary particle" refers to a particle of a given material that has not undergone agglomeration.

As used herein, the term "secondary particle" refers to a particle of a given material that has undergone agglomeration.

### Positive Electrode Slurry Composition

In some embodiments, a positive electrode slurry composition includes a positive electrode active material including a secondary particle of a lithium nickel-based composite oxide, carbon nanotubes, and a cellulose-based additive.

The lithium nickel-based composite oxide are secondary particles in which primary particles are agglomerated. As the charge/discharge cycle is repeated, the lithium nickel-based composite oxide experiences volume expansion of the crystal structure, resulting in gaps between the primary particles being widened, thereby misaligning the arrangement of the primary particles. This alters the degree of shrinkage and expansion of the secondary particles and the degree of shrinkage and expansion of the positive electrode including the secondary particles. Structural cracking and/or destruction of the secondary particles and/or the positive electrode may happen, resulting in disconnection of the electrochemical charge transfer network, charge imbalance, increase of an area for side reactions with an electrolyte, and deterioration of the charge/discharge cycle-life.

Prior art methods attempted to uniformly coat a carbon-based material, such as graphene or carbon nanotubes, on the positive electrode active material surface. However, a multi-step process was required to uniformly coat the carbon-based material on the positive electrode active material surface. Each step incurs various costs, resulting in an increase in cost during manufacturing.

On the other hand, carbon nanotubes have been added to the positive electrode as the conductive material to improve conductivity of a positive electrode and to reduce an amount of the conductive material. However, carbon nanotubes do not disperse uniformly. Even if they do, the carbon nanotubes may be concentrated in an upper portion of the positive electrode upon drying a solvent when forming the positive electrode, leading to negative consequences when applied to a relatively high-load electrode. Because carbon nanotubes are not selectively positioned on the positive electrode active material surface, conductivity of the positive electrode may not be improved and the amount of the conductive material may not be reduced.

The positive electrode slurry composition, to which a cellulose-based additive is added to improve dispersibility of the carbon nanotube, may suppress the carbon nanotube from being agglomerated in a certain portion of the positive electrode and potentially forming a carbon nanotube film despite subsequent drying. The carbon nanotubes are uniformly dispersed in the positive electrode and uniformly coated on the positive electrode active material surface without separately coating the carbon nanotube on the positive electrode active material. Accordingly, the positive electrode slurry composition may prevent particle cracks caused by contraction and expansion of the positive electrode active material due to repeated charging and discharging, improving battery cycle-life. In particular, when the carbon nanotube is used rather than other known conductive materials, electrons may be readily transferred within the positive electrode, exhibiting excellent electrical conductivity. A stable conductive network may be formed through the carbon nanotube connecting primary particles on the positive electrode active material surface.

### Positive Electrode Active Material

The positive electrode active material includes a lithium nickel-based composite oxide. According to some embodiments, a positive electrode active material can realize a relatively high energy density by including a lithium nickel-based composite oxide.

The lithium nickel-based composite oxide may be, for example, represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.2, 0.8≤x1<1, 0<y1≤0.2, 0≤z1≤0.2, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S. M¹ and M² may be different elements.

In Chemical Formula 1, 0.85≤x1<1, 0<y1≤0.15, and 0≤z1≤0.15; or 0.9≤x1<1, 0<y1≤0.1, and 0≤z1≤0.1.

The lithium nickel-based composite oxide may be represented by the Chemical Formula 2 or Chemical Formula 3 as a specific example.

[Chemical Formula 2] Liₐ₂Niₓ₂Co_{y2}M³_{z2}O_{2-b2}X_{b2}

In Chemical Formula 2, 0.9≤a2≤1.2, 0.8≤x2<1, 0<y2≤0.2, 0≤z2≤0.2, 0.9≤x2+y2+z2≤1.1, and 0≤b2≤0.1, M³ is one or more elements selected from Al, B, Ba, Ca, Ce, Cr, Cu, Fe, Mg, Mn, Mo, Nb, Si, Sn, Sr, Ti, V, W, Y, Zn, and Zr, and X is F, P, S, or a combination thereof.

In Chemical Formula 2, 0.9≤x2≤0.99, 0.01≤y2≤0.1, and 0≤z2≤0.1.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.2, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is Al, Mn, or a combination thereof, M⁵ is one or more elements selected from B, Ba, Ca, Ce, Cr, Cu, Fe, Mg, Mo, Nb, Si, Sn, Sr, Ti, V, W, Y, Zn, and Zr, and X is F, P, S or a combination thereof.

In Chemical Formula 3, 0.9≤x3≤0.98, 0.01≤y3≤0.09, 0.01≤z3≤0.09, and 0≤w3≤0.09.

In the lithium nickel-based composite oxide, a nickel content based on 100 mol% of the total metal excluding lithium may be greater than or equal to about 80 mol%, for example, greater than or equal to about 85 mol%, greater than or equal to about 90 mol%, greater than or equal to about 91 mol%, greater than or equal to about 94 mol%, or less than or equal to about 99 mol%. In this manner, relatively high capacity and relatively high energy density may be achieved.

The lithium nickel-based composite oxide may exist as secondary particles in which a plurality of primary particles is agglomerated. The secondary particles may be spherical, elliptical, polyhedral, or irregular in shape, and the primary particles may be spherical, elliptical, or plate-shaped.

An average particle diameter (D₅₀) of the secondary particles may be about 2 µm to about 20 µm, for example about 3 µm to about 18 µm, or about 4 µm to about 15 µm. The average particle diameter (D₅₀) may be obtained by randomly measuring the size (diameter or major axis length) of about 20 particles from a scanning electron microscope image of lithium nickel-based composite oxide particles in the form of secondary particles to obtain a particle size distribution, and taking the diameter of particles having a cumulative volume of 50 volume% from the particle size distribution as the average particle diameter. In this manner, relatively high capacity and relatively high energy density can be achieved, and the electrochemical performance of the positive electrode may be improved because the carbon nanotube is advantageously and selectively located on the surface of the secondary particles.

The average particle diameter (D₅₀) of the primary particles forming the secondary particles of the lithium nickel-based composite oxide may be less than or equal to about 6 µm, for example about 100 nm to about 4 µm, about 100 nm to about 2 µm, about 200 nm to about 800 nm, or about 300 nm to about 700 nm. The average particle diameter of the primary particles may be obtained by randomly measuring the size (diameter or major axis length) of about 20 primary particles from a scanning electron microscope or transmission electron microscope image of the surface of the secondary particles to obtain a particle size distribution, and taking the diameter of particles having a cumulative volume of 50 volume% from the particle size distribution as the average particle diameter (D₅₀). In this manner, the positive electrode active material can realize high initial charge/discharge capacity and efficiency and excellent output characteristics and cycle-life characteristics.

### Carbon Nanotube

The positive electrode slurry composition according to some embodiments includes carbon nanotube. When graphene is coated by using a known graphene coating technology, the graphene, which is a 2D material, may cover the entire surface of a lithium nickel-based composite oxide, preventing lithium-ion movement between the positive electrode active material surface and the electrolyte, thereby deteriorating the relative high-capacity, high-power, and long cycle-life characteristics of the rechargeable lithium battery. The carbon nanotube, which is essentially a 1D material, may connect the primary particles together on the surface of the lithium nickel-based composite oxide and may not cover the entire surface of the lithium nickel-based composite oxide, maintaining the geometry of secondary particle without hindering lithium ion movement. Contraction and expansion of the secondary particles, and contraction and expansion of a positive electrode may be suppressed, thereby improving battery cycle-life characteristics.

The carbon nanotube is a highly crystalline carbon material in which carbon atoms are arranged in a hexagonal arrangement to form a tube shape. The carbon nanotube has excellent electrical conductivity and lithium ionic conductivity. Therefore, the cycle characteristics may be significantly improved by maintaining the current and voltage distribution within the positive electrode uniformly during the charge/discharge cycle, and the output characteristics of the battery may be improved due to the improved electrical conductivity. Because the carbon nanotube is made up of carbon atoms with strong covalent bonds, they have excellent tensile strength and high resistance to destruction, and can improve battery safety.

The carbon nanotube (CNT) may include single-walled carbon nanotube (SWCNT), multi-walled carbon nanotube (MWCNT), or a combination thereof. The carbon nanotube according to some embodiments may be multi-walled carbon nanotube. Among the different type of carbon nanotubes, the multi-walled carbon nanotube is relatively cheaper than the single-walled carbon nanotube, making it possible to secure price competitiveness.

The carbon nanotube (CNT) may include bare carbon nanotube (without surface treatment), surface-treated carbon nanotube, or a combination thereof. The bare carbon nanotube refers to one having surface functional groups (C-O, C-H, C-OOH, etc.) that generally exist on the surface of carbon nanotube. These functional groups are produced during synthesis of the carbon nanotube. The surface-treated carbon nanotube refers to carbon nanotube to which an additional functional group is attached by breaking and oxidizing the carbon ring structure on the surface of the carbon nanotube, more specifically, the surface of a bare carbon nanotube, using an acid such as nitric acid. Such additional functional groups include carboxylic acid, amine, or polyethylene glycol, and the surface-treated carbon nanotube with such additional functional groups include COOH functionalized CNT, amine functionalized CNT, and polyethylene glycol functionalized CNT. The carbon nanotube may include, without limitation, bare carbon nanotube or surface-treated carbon nanotube.

The average diameter of the carbon nanotube may be about 0.8 nm to about 100 nm. For example, it may be about 1 nm to about 90 nm, about 2 nm to about 80 nm, or about 3 nm to about 70 nm. The average diameter of the carbon nanotube may be an average value of the diameter of the thickest part measured by observing 10 or more carbon nanotubes using a scanning electron microscope (SEM). In this manner, an appropriate amount of electrons can move, thereby forming a stable conductive network.

The average aspect ratio of the carbon nanotube may be about 100 to about 500,000. For example, it may be about 200 to about 300,000, about 1,000 to about 100,000, or about 2,000 to about 50,000. The average aspect ratio of the carbon nanotube is a ratio of the average length to the average diameter (average length/average diameter ratio). The average aspect ratio of the carbon nanotube may be calculated by measuring the average diameter and average length and dividing the average length by the average diameter. The average diameter can be measured in the same manner, and the average length may be an average value of the length measured by observing 10 or more carbon nanotubes using a scanning electron microscope (SEM). In this manner, a sufficient conductive network can be formed with only a small amount of carbon nanotubes when manufacturing a positive electrode using the positive electrode slurry.

### Cellulose-based Additive

The positive electrode slurry composition according to some embodiments includes a cellulose-based additive. By including the cellulose-based additive, the dispersibility of carbon nanotubes is improved, and the carbon nanotubes may be selectively and uniformly coated on the surface of a positive electrode active material. The carbon nanotubes may be selectively coated on the surface of a positive electrode active material. Accordingly, particle cracking, due to shrinkage and expansion of the positive electrode active material caused by repeated charging and discharging, can be prevented, and the battery cycle-life can be improved.

The cellulose-based additive includes an alkyl group and is not limited in type as long as it includes a functional group capable of forming a hydrogen bond. For example, the cellulose-based additive may include ethyl cellulose, cellulose acetate, carboxylmethyl cellulose, hydroxypropyl cellulose, methyl cellulose, nitrocellulose, or a combination thereof.

The lithium nickel-based composite oxide may be included in an amount of about 60 wt% to about 99.9 wt%, about 70 wt% to about 99.8 wt%, about 80 wt% to about 99 wt%, about 90 wt% to about 99 wt%, or about 95 wt% to about 99 wt% based on 100 wt% of the solid content of the positive electrode slurry composition.

The carbon nanotube may be included in an amount of about 0.1 wt% to about 5 wt%, for example, about 0.1 wt% to about 4 wt%, about 0.1 wt% to about 3 wt%, about 0.1 wt% to about 2 wt%, or about 0.1 wt% to about 1 wt% based on 100 wt% of the solid content of the positive electrode slurry composition.

The cellulose-based additive may be included in an amount of about 0.01 wt% to about 5 wt%, for example, about 0.05 wt% to about 4 wt%, about 0.1 wt% to about 3 wt%, about 0.1 wt% to about 2 wt%, or about 0.1 wt% to about 1 wt% based on 100 wt% of the solid content of the positive electrode slurry composition. In this manner, the cellulose-based additive can be uniformly dispersed in the solvent and can interact appropriately with the carbon nanotube.

A weight ratio of the carbon nanotube to the cellulose-based additive may be about 10:1 to about 1:5, about 9:1 to about 1:4, about 8:1 to about 1:3, or about 7:1 to about 1:2. In this manner, interaction of the cellulose-based additive with the carbon nanotube is maximized, effectively dispersing the carbon nanotube and reducing the resistance of the positive electrode, thereby efficiently producing the positive electrode.

### Others

The positive electrode slurry composition may optionally include a binder, a conductive material, or a combination thereof in addition to the positive electrode active material, the carbon nanotube, and the cellulose-based additive.

The binder improves binding properties of positive electrode active material particles with one another and with a positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

The conductive material is included to provide electrode conductivity. Any electrically conductive material may be used as the conductive material unless it causes a detrimental chemical change. Examples of the conductive material may include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

An amount of the binder in the positive electrode slurry composition may be about 0.1 wt% to about 5 wt% based on 100 wt% of the positive electrode slurry composition, and an amount of the conductive material may be about 0.1 wt% to about 5 wt% based on 100 wt% of the positive electrode slurry composition.

The positive electrode slurry composition may include a solvent, and the solvent may be, for example, a non-aqueous organic solvent. The solvent may include, for example, cyclic aliphatic hydrocarbon such as cyclopentane and cyclohexane; aromatic hydrocarbon such as toluene, xylene, and ethylbenzene; ketone such as acetone, ethyl methyl ketone, diisopropyl ketone, cyclohexanone, methylcyclohexane, and ethylcyclohexane; chlorinated aliphatic hydrocarbon such as methylene chloride, chloroform, and carbon tetrachloride; ester such as ethyl acetate, butylacetate, γ-butyrolactone, and ε-caprolactone; acetonitrile such as acetonitrile and propionitrile; ether such as tetrahydrofuran and ethylene glycol diethyl ether; alcohol such as methanol, ethanol, isopropanol, ethylene glycol, and ethylene glycol monomethyl ether; or an amide such as N-methyl-2-pyrrolidone and N,N-dimethylformimide. The solvent may be a single solvent or a mixture of two or more solvents.

The positive electrode slurry composition may include a positive electrode active material including secondary particles of a lithium nickel-based composite oxide, and a positive electrode active material including single particles of the lithium nickel-based composite oxide.

The single particles of the positive electrode active material may include a lithium nickel-based composite oxide. The single particles of the positive electrode active material may be represented by Chemical Formulas 1 to 3, and the nickel content may be greater than or equal to about 80 mol% based on 100 mol% of total metal other than lithium. The single particles of the positive electrode active material may be a primary particle separated from secondary particles of the positive electrode active material.

The average particle diameter (D₅₀) of the single particles may be about 1 µm to about 12 µm, for example about 2 µm to about 11 µm, or about 3 µm to about 8 µm. The average particle diameter (D₅₀) may be obtained by randomly measuring the size (diameter or major axis length) of about 20 particles from a scanning electron microscope image of the single particles of the positive electrode active material to obtain a particle size distribution, and taking the diameter of particles having a cumulative volume of 50 volume% from the particle size distribution as the average particle diameter. In this manner, relatively high initial charge/discharge capacity and efficiency may be realized, and excellent output characteristics and cycle-life characteristics may be realized.

When the secondary particles of the positive electrode active material and the single particles of the positive electrode active material are mixed (hereinafter referred to as "mixed positive electrode active material"), a mixing weight ratio of the secondary particles of the positive electrode active material and the single particles of the positive electrode active material may be about 1:9 to about 9:1, for example, about 2:8 to about 9:1, about 3:7 to about 9:1, about 4:6 to about 9:1, about 5:5 to about 8:2, or about 6:4 to about 7:3.

When the secondary particles of the positive electrode active material and the single particles of the positive electrode active material are mixed, the average particle diameter (D₅₀) of the mixed positive electrode active material may be about 1 µm to about 20 µm, for example about 3 µm to about 18 µm, or about 4 µm to about 15 µm. The average particle diameter (D₅₀) may be obtained by randomly measuring the size (diameter or major axis length) of about 20 particles from a scanning electron microscope image of mixed positive electrode active materials to obtain a particle size distribution, and taking the diameter of particles having a cumulative volume of 50 volume% from the particle size distribution as the average particle diameter. In this manner, relatively high capacity and energy density may be achieved, and the electrochemical performance of the positive electrode can be improved because the carbon nanotube is advantageously and selectively located on the surface of the secondary particles.

### Positive Electrode

The positive electrode includes a positive electrode current collector and a positive electrode active material layer disposed on the positive electrode current collector and including a positive electrode active material including secondary particles of a lithium nickel-based composite oxide, and carbon nanotubes. The positive electrode active material layer further includes a cellulose derivative, amorphous carbon, or a combination thereof. According to some embodiments, a positive electrode can realize relatively high capacity while suppressing structural deterioration and crack occurrence due to charge/discharge, and realize relatively long cycle-life.

### Positive Electrode Current Collector

The positive electrode current collector is not particularly limited as long as it has conductivity and does not cause a detrimental chemical change in the rechargeable lithium battery. The positive electrode current collector may include an aluminum foil or a stainless-steel foil having a thickness of about 10 µm to about 15 µm.

### Positive Electrode Active Material Layer

The positive electrode active material layer includes positive electrode active material including secondary particles of a lithium nickel-based composite oxide, and carbon nanotubes. The positive electrode active material layer further includes a cellulose derivative, amorphous carbon, or a combination thereof.

An amount of the positive electrode active material may be about 60 wt% to about 99.9 wt%, about 70 wt% to about 99.8 wt%, about 80 wt% to about 99 wt%, about 90 wt% to about 99 wt%, or about 95 wt% to about 99 wt% based on 100 wt% of the positive electrode active material layer. In this manner, the energy density may be improved due to a relatively large amount of positive electrode active material.

The carbon nanotube may be evenly dispersed in the positive electrode active material within the positive electrode active material layer, and may be disposed on the surface of the positive electrode active material.

When the carbon nanotubes are evenly dispersed in the positive electrode active material and disposed on the surface of the positive electrode active material, the carbon nanotubes are randomly arranged on the surface of the secondary particles of the lithium nickel-based composite oxide and connect between the primary particles. For example, the carbon nanotubes may exist in a three-dimensional net shape or spider web shape on the surface of the secondary particle.

The carbon nanotube is a crystalline carbon material in which carbon atoms are arranged in a hexagonal arrangement to form a tube shape. The carbon nanotube has excellent electrical conductivity and lithium ionic conductivity. Cycle characteristics may be significantly improved by uniformly maintaining the current and voltage distribution within the positive electrode during the charge and discharge cycle, and output characteristics of the battery may be improved due to the improved conductivity. Because the carbon nanotubes include carbon atoms with strong covalent bonds, they have excellent tensile strength and resistance to destruction, and can improve battery safety.

The carbon nanotubes may be provided independently in the form of a single fiber or a bundle of fibers, and may be provided in a form that is connected through some point contact or point surface. Additionally, carbon nanotubes on the surface of the positive electrode active material may be spaced apart from each other. The carbon nanotubes on the surface of the positive electrode active material are arranged so as to have a certain space, so that lithium ions can move freely between the surface of the positive electrode active material and the electrolyte, thereby enabling relatively high capacity, high output, and long cycle-life characteristics.

The carbon nanotube may cover about 30% to about 80% of the total area of the positive electrode active material. For example, the carbon nanotube may cover about 35% to about 75%, about 40% to about 70%, or about 45% to about 65% of the total area of the positive electrode active material. The area of the carbon nanotube based on the total area of the positive electrode active material may be quantitatively calculated by setting a specific pixel intensity (threshold) in an image of the positive electrode active material taken with a scanning electron microscope to select pixels with higher pixel intensity than specific pixel intensity and considering the selected pixels as the area where the carbon nanotube is positioned. If the area of the carbon nanotube based on the total area of the positive electrode active material is within the range, misalignment of the primary particles, such as gaps between the primary particle according to charging and discharging, may be prevented without hindering the lithium ion movement between the positive electrode active material and the electrolyte. The secondary particle shape can be maintained and contraction and expansion of the secondary particles and the positive electrode may be suppressed, improving battery cycle-life characteristics. For example, if the carbon nanotube has an area of less than about 30% of the total area of the positive electrode active material, an adhesive force of the carbon nanotube adhered onto the positive electrode active material surface, to maintain its particle shape, may be weakened, deteriorating the battery cycle-life characteristics and failing to form the appropriate conductive network. If the carbon nanotube has an area of greater than about 80% of the total area of the positive electrode active material, the carbon nanotube may cover most of the positive electrode active material surface, hindering lithium-ion movement and thereby, deteriorating battery performance.

The carbon nanotube may be included in an amount of about 0.1 wt% to about 5 wt% based on 100 wt% of the positive electrode active material layer. For example, the carbon nanotube may be included in an amount of about 0.1 wt% to about 4 wt%, about 0.1 wt% to about 3 wt%, about 0.1 wt% to about 2 wt%, or about 0.1 wt% to about 1 wt%. The carbon nanotube according to some embodiments are used in a relatively small amount compared to the amount of graphene in a known graphene coating, thereby reducing the amount of a conductive material in the positive electrode compared to the graphene coating layer. Advantageously, the energy density of the positive electrode can be improved and battery cycle-life characteristics can be improved.

A total amount of the cellulose derivative, amorphous carbon, or combination thereof may be included in an amount of about 0.01 wt% to about 5 wt%, for example, about 0.05 wt% to about 4 wt%, about 0.1 wt% to about 3 wt%, about 0.1 wt% to about 2 wt%, or about 0.1 wt% to about 1 wt% based on 100 wt% of the positive electrode active material layer. The cellulose derivative, amorphous carbon, or combination thereof may be derived from a cellulose-based additive in the positive electrode slurry composition used in forming the positive electrode active material layer. The total amount may be equal to the amount of the cellulose-based additive included in the positive electrode slurry composition.

The cellulose derivative may be a cellulose-based additive that is not carbonized and remains intact despite heat treatment. The cellulose derivative contains an alkyl group, and its type is not limited as long as it is a cellulose derivative containing a functional group capable of hydrogen bonding. The cellulose derivative may include, for example, ethyl cellulose, cellulose acetate, carboxymethyl cellulose, hydroxypropyl cellulose, methyl cellulose, nitrocellulose, or a combination thereof.

The amorphous carbon is carbon that has no crystallinity or very low crystallinity, and is distinguished from crystalline carbon or graphitic carbon.

The amorphous carbon may include a soft carbon, a mesophase pitch carbonized product, and a carbide of the cellulose derivative. The soft carbon refers to a carbon material that can be graphitized, and is a material that is graphitized by heat treatment at a high temperature, for example, about 2800 °C. The carbide of cellulose derivative is an amorphous carbon material formed when cellulose-based additives undergo heat treatment or carbonization processes.

The amorphous carbon according to some embodiments may include a carbide of a cellulose derivative. The type of the carbide of the cellulose derivative is not limited as long as it includes an alkyl group and a functional group capable of forming a hydrogen bond. For example, the carbide of the cellulose derivative may include a carbide of ethyl cellulose, a carbide of acetic cellulose, a carbide of carboxymethyl cellulose, a carbide of hydroxypropyl cellulose, a carbide of methyl cellulose, a carbide of nitrocellulose, or a combination thereof.

The amorphous carbon may be disposed between the lithium nickel-based composite oxide and the carbon nanotube. This amorphous carbon acts as a type of adhesive that enables the carbon nanotube to be attached to the surface of the lithium nickel-based composite oxide, so that the carbon nanotube is strongly attached to the lithium nickel-based composite oxide, further maintaining the secondary particle shape and suppressing shrinkage and expansion of the secondary particles and the positive electrode.

When both the cellulose derivative and the amorphous carbon are included, a weight ratio of the cellulose derivative and the amorphous carbon may be about 1:1 to about 1:30, for example, about 1:2 to about 1:20, about 1:3 to about 1:15, or about 1:5 to about 1:10.

The positive electrode active material layer may optionally include a binder, a conductive material, or a combination thereof.

### Method of Manufacturing Positive Electrode

Embodiments of the present disclosure provide a method of manufacturing a positive electrode which includes preparing a positive electrode slurry composition including a positive electrode active material including secondary particles of a lithium nickel-based composite oxide, carbon nanotube, and a cellulose-based additive; coating the positive electrode slurry composition onto the positive electrode current collector and drying the positive electrode slurry composition ; and performing heat treatment.

A positive electrode slurry composition including a positive electrode active material including secondary particles of a lithium nickel-based composite oxide, carbon nanotube, and a cellulose-based additive are prepared.

The preparing of the positive electrode slurry composition may be performed by mixing a secondary particle of the lithium nickel-based composite oxide, the carbon nanotubes, and thecellulose-based additive in a solvent; or the positive electrode slurry composition may be prepared by adding the carbon nanotubes and the cellulose-based additive in a solvent to prepare a pre-dispersion, and adding the pre-dispersion to a slurry including a secondary particle of the lithium nickel-based composite oxide.

The solvent of the pre-dispersion may be a solvent generally used in the relevant technical field, and may include dimethyl sulfoxide (DMSO), isopropyl alcohol, N-methyl-2-pyrrolidone (NMP), acetone, or water, and one of these may be used alone or a mixture of two or more thereof may be used.

The positive electrode slurry composition is coated onto the positive electrode current collector and then dried. In the drying step, the solvent in the positive electrode slurry composition may be removed by volatilization. The drying may be performed at a temperature of about 60 °C to about 160 °C, for example, about 90 °C to about 160 °C, about 100 °C to about 160 °C, or about 100 °C to about 140 °C.

Heat treatment is performed.

The heat treatment may be performed at a temperature of about 180 °C to about 300 °C under vacuum or a specific gas atmosphere for 10 to 60 minutes, and the specific gas may include oxygen, argon, air, or nitrogen. Via heat treatment, the cellulose-based additive is partially carbonized to form carbides, allowing the carbon nanotube to be strongly attached to the surface of the positive electrode active material. Accordingly, particle cracking due to shrinkage and expansion of the positive electrode active material is prevented even during repeated charge/discharge, thereby improving battery cycle-life.

### Rechargeable Lithium Battery

Embodiments of the present disclosure provide a rechargeable lithium battery including the positive electrode, a negative electrode, and an electrolyte. The rechargeable lithium battery may include a positive electrode, a negative electrode, a separator between the positive electrode and the negative electrode, and an electrolyte.

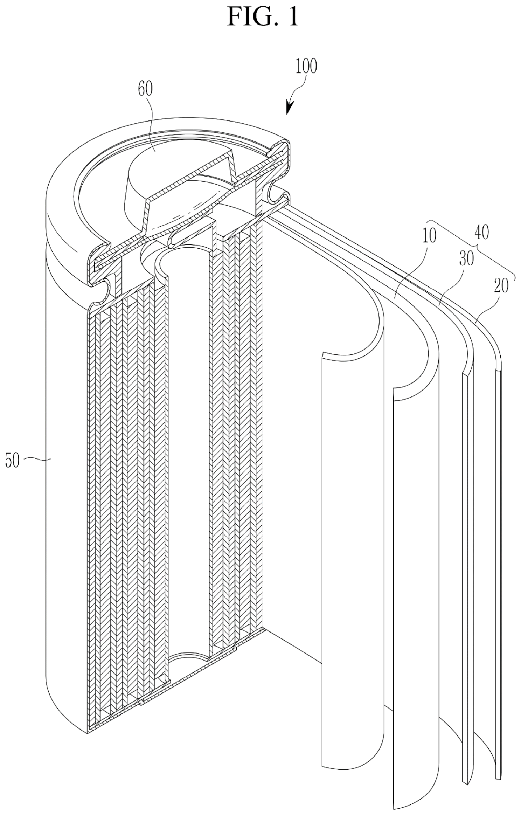

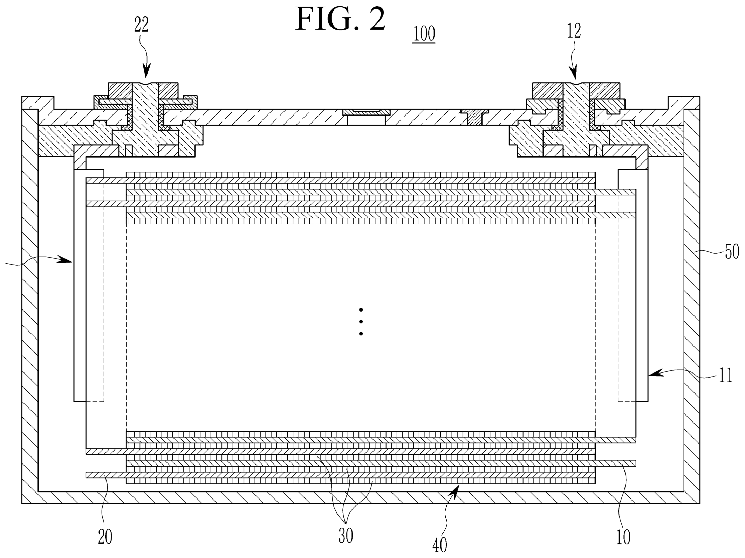

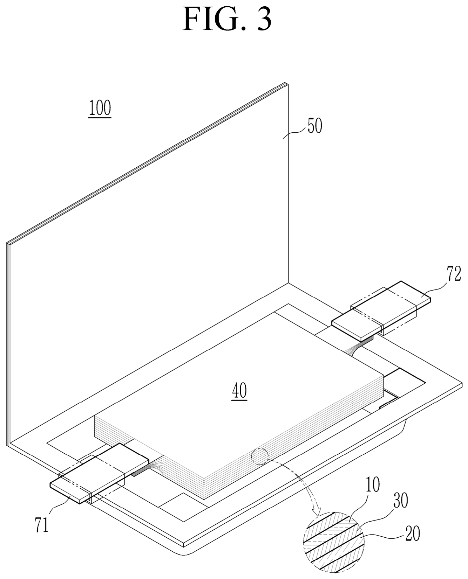

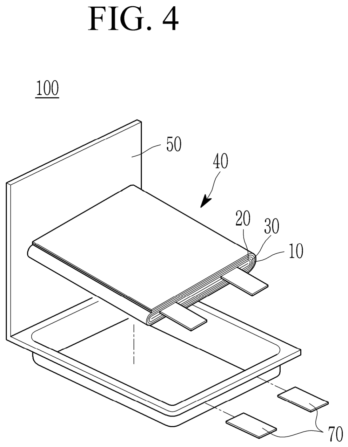

The rechargeable lithium battery may be classified into cylindrical, prismatic, pouch-shaped, or coin-shaped, depending on the shape. FIGS. 1 to 4 are schematic views showing the rechargeable lithium battery, where FIG. 1 refers to a cylindrical battery, FIG. 2 refers to a prismatic battery, and FIGS. 3 and 4 refer to pouch-shaped batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery can suppress cycle-life degradation and improve battery performance by including the positive electrode.

### Negative Electrode

The negative electrode for a rechargeable lithium battery includes a negative electrode current collector and a negative electrode active material layer on the negative electrode current collector. The negative electrode active material layer includes a negative electrode active material, and may optionally include a binder, a conductive material, or a combination thereof.

The negative electrode current collector is not particularly limited as long as it has conductivity and does not cause a detrimental chemical change in the rechargeable lithium battery. The negative electrode current collector may include a copper foil having a thickness of about 10 µm to about 15 µm.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, or calcined coke.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2, for example, SiO₂), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnOₓ (0<x≤2, for example, SnO₂), a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are agglomerated and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a silicon content may be about 10 wt% to about 50 wt% and an amount of amorphous carbon may be about 50 wt% to about 90 wt% based on 100 wt% of the silicon-carbon composite. When the silicon-carbon composite includes silicon, amorphous carbon, and crystalline carbon, a silicon content may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form of silicon. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a diameter of a particle where a cumulative volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

The negative electrode active material may be included in an amount of about 90 wt% to about 99.8 wt%, or about 94 wt% to about 99 wt%, based on 100 wt% of the negative electrode active material layer.

The binder serves to adhere the negative electrode active material particles to each other and to adhere the negative electrode active material to the negative electrode current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the binder in the negative electrode active material layer, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, or silver; a conductive polymer such as a polyphenylene derivative; or a mixture thereof.

An amount of the binder may be about 0.1 wt% to about 5 wt% based on 100 wt% of the negative electrode active material layer, and an amount of the conductive material may be about 0.1 wt% to about 5 wt% based on 100 wt% of the negative electrode active material layer.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may comprise a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, or caprolactone. The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The alcohol-based solvent may include ethanol or isopropyl alcohol. The aprotic solvent may include nitriles such as R-CN (wherein R is a C2 to C20 linear, branched, or cyclic hydrocarbon group, and may include a double bond, an aromatic ring, or an ether bond); amides such as dimethylformamide; dioxolanes such as 1,3-dioxolane or 1,4-dioxolane; or sulfolanes.

The non-aqueous organic solvent may be used alone or in a mixture of two or more types. When two or more types are used in a mixture, a mixing ratio can be appropriately adjusted according to the desired battery performance.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, or cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), or lithium bis(oxalato) borate (LiBOB).

A concentration of lithium salt may be within the range of about 0.1 M to about 2.0 M. In this manner, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene separator, polypropylene separator, polyvinylidene fluoride separator, or a multilayer film of two or more layers thereof such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene(for example, TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

### EXAMPLES

The following examples are only examples of the present disclosure, and the present disclosure is not limited to the following examples.

### Example 1

### (1) Manufacturing of Positive Electrode

A positive electrode active material including secondary particles of a lithium nickel-based composite oxide of LiNi_{0.91}Co_{0.08}Al_{0.01}O₂ were formed from primary particles having an average particle diameter (D₅₀) of about 700 nm and having an average particle diameter (D₅₀) of about 15 µm. Multi-walled carbon nanotubes were used as carbon nanotubes having an average aspect ratio of about 15,000 and an average diameter of about 5 nm. Ethyl cellulose was used as a cellulose-based additive. Polyvinylidene fluoride was used as a binder. The lithium nickel-based composite oxide, the carbon nanotubes, the cellulose-based additive, and the binder was mixed at weight ratio of 98.5:0.25:0.25:1, to obtain a mixture. The mixture was added to an N-methyl-2-pyrrolidone solvent and mixed with a centrifugal mixer, preparing a positive electrode slurry composition.

The positive electrode slurry composition was adjusted to have a solid content of about 70%.

The positive electrode slurry composition was coated on an aluminum foil by using a doctor blade and dried at 120 °C in a convection oven for 20 minutes to remove the N-methyl-2-pyrrolidone.

An electrode was obtained by removing the solvent via heat-treatment at 250 °C by using a tube furnace. The details of the heat-treatment are as follows: the heat treatment was performed under an argon atmosphere by increasing the temperature at 5 °C/min and maintaining the temperature at 250 °C for 10 minutes.

The electrode was compressed having a slurry density of 3 g/cc to manufacture a positive electrode in which a positive electrode active material layer was formed on the aluminum foil. The content of the positive electrode active material was 98.5 wt%, the content of the carbon nanotube was 0.25 wt%, the content of the amorphous carbon was 0.225 wt%, the content of the cellulose derivative was 0.025 wt%, and the content of the binder was 1 wt%. The positive electrode active material layer was formed at a loading level of about 5 mg/cm².

### (2) Manufacturing of Rechargeable Lithium Battery Cell

The positive electrode was used with a lithium metal as a negative electrode and a glass fiber filter as a separator. The separator was inserted between the two electrodes to manufacture an electrode assembly, which was inserted into a case. An electrolyte was injected into the case, manufacturing a 2032-coin cell as a rechargeable lithium battery cell. The electrolyte was prepared by adding 3 wt% of VC (vynylene carbonate) to a mixed solvent of EC (ethylenecarbonate):MEC (methylethyl carbonate):DMC (dimethylcarbonate) in a volume ratio of 3:3:4, and dissolving 1 M LiPF₆ therein.

### Example 2

A positive electrode and a rechargeable lithium battery cell were manufactured in a similar manner as in Example 1 except that the positive electrode active material layer of Example 1 had a loading level of 25 mg/cm².

### Comparative Example 1

A positive electrode and a rechargeable lithium battery cell were manufactured in a similar manner as in Example 1 except that the positive electrode slurry composition was prepared by mixing the same positive electrode active material of Example 1, Super P as the conductive material, and polyvinylidene fluoride as the binder in a weight ratio of 98.75:0.25:1.

### Comparative Example 2

A positive electrode and a rechargeable lithium battery cell were manufactured in a similar manner as in Comparative Example 1 except that drying was performed, but the heat treatment after the drying was not performed.

### Reference Example 1

A positive electrode and a rechargeable lithium battery cell were manufactured in a similar manner as in Example 1 except that the positive electrode active material, the carbon nanotube, and the binder were mixed in a weight ratio of 98.75:0.25:1 without adding the cellulose-based additive.

### Reference Example 2

A positive electrode and a rechargeable lithium battery cell were manufactured in a similar manner as in Reference Example 1 except that the positive electrode active material layer of Reference Example 1 had a loading level of 25 mg/cm².

### Reference Example 3

A positive electrode and a rechargeable lithium battery cell were manufactured in a similar manner as in Example 1 except that drying was performed, but the heat treatment after the drying was not performed. The positive electrode active material layer included 98.5 wt% of the positive electrode active material, 0.25 wt% of the carbon nanotube, 0.25 wt% of the cellulose derivative, and 1 wt% of the binder.

### Evaluation Example 1: Evaluation of Carbon Nanotube Dispersibility

In order to evaluate dispersibility of carbon nanotube depending on the cellulose-based additive, each slurry composition was prepared in a similar manner as in Example 1 and Reference Example 1 except a positive electrode active material was not added, the slurry composition was coated on an aluminum foil and dried and heat-treated. SEM images of the samples were taken to evaluate the dispersibility of carbon nanotube.

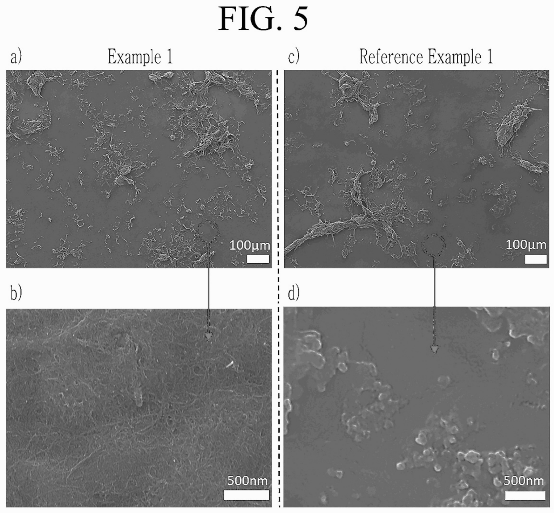

FIG. 5 shows SEM photographs of the samples. FIG. 5 a) and b) shows a sample to which the cellulose-based additive was added, and FIG. 5 c) and d) shows a sample to which the cellulose-based additive was not added.

Referring to FIG. 5, in the sample to which the cellulose-based additive was added (FIG. 5 a)) and the sample to which the cellulose-based additive was not added (FIG. 5 c)), agglomeration of the carbon nanotube was observed on the surface. FIG. 5 b) shows an enlarged image of a) confirming that carbon nanotubes were relatively uniformly dispersed over the entire surface of the aluminum foil. FIG. 5 d) shows an enlarged image of c) confirming that carbon nanotubes were not evenly dispersed but agglomerated on the surface of the aluminum foil. Accordingly, it was confirmed that the dispersibility of carbon nanotubes can be improved when adding the cellulose-based additive. The carbon nanotube was evenly dispersed on the surface of the positive electrode.

### Evaluation Example 2: Evaluation of Surface and Cross-section of Positive Electrode

SEM images of the surfaces of the positive electrodes according to Example 1 and Reference Example 1 were taken to evaluate how the carbon nanotube was adhered on the surface of the positive electrode active materials. SEM images of the cross-sections of the positive electrodes of Example 2 and Reference Example 2 were taken to evaluate how carbon nanotube was adhered to the positive electrode active material surface.

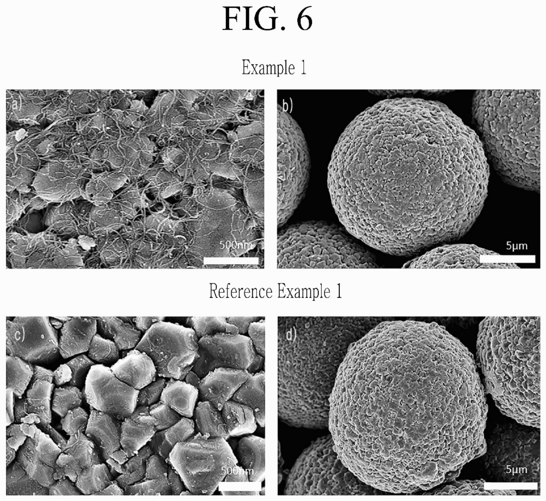

FIG. 6 is a photograph showing the surface of the positive electrodes according to Example 1 and Reference Example 1. FIGS. 6 a) and b) show the surface of the positive electrode of Example 1 at different magnifications. FIGS. 6 c) and d) show the surface of the positive electrode of Reference Example 1 at different magnifications.

Referring to FIGS. 6 a) and b) Example 1, which was manufactured by using a positive electrode slurry composition to which a cellulose-based additive was added, showed that carbon nanotubes were selectively adhered to the positive electrode active material surface. Referring to FIGS. 6 c) and d) Reference Example 1, to which a cellulose-based additive was not added, showed that carbon nanotubes were not selectively adhered to the positive electrode active material surface. Example 1 exhibited a greater amount of carbon nanotubes adhered onto the positive electrode active material surface than the amount of carbon nanotubes of Reference Example 1. Accordingly, the cellulose-based additive was confirmed to play a role of selectively coating the carbon nanotube.

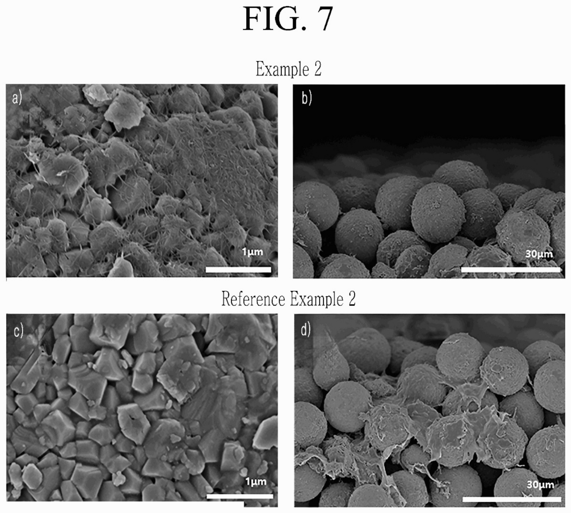

FIG. 7 is a photograph of the cross-sections of the positive electrodes of Example 2 and Reference Example 2 at different magnifications. FIGS. 7 a) and b) show the cross-section of the positive electrode of Example 2 at different magnifications, and FIGS. 7 c) and d) show the cross-section of the positive electrode of Reference Example 2 at different magnifications.

Referring to FIGS. 7 a) and b), Example 2, which was manufactured by using a positive electrode slurry composition prepared by adding a cellulose-based additive, shows that carbon nanotubes were selectively coated on the positive electrode active material surface while the carbon nanotube was not agglomerated on an upper portion of an electrode, as the carbon nanotube was bound with a binder and localization of the carbon nanotube was suppressed. Referring to FIGS. 7 c) and d), Reference Example 2, to which a cellulose-based additive was not added, shows that carbon nanotubes were not selectively coated on the positive electrode active material surface and were agglomerated to the upper portion of an electrode. Accordingly, it was confirmed that the cellulose-based additive played a role of selectively coating the carbon nanotube even at a relatively high loading level, increasing dispersibility of the carbon nanotube.

### Evaluation Example 3: Evaluation of Adhesive Force of Carbon Nanotube According to Heat Treatment

The positive electrodes of Example 1 and Reference Example 3 were evaluated with respect to an adhesive force of the carbon nanotube before ultrasonication and after the ultrasonication for 1 minute, 3 minutes, and 5 minutes by extracting the positive electrode active materials using a scraper or a knife and adding the extracted positive electrode active materials to an N-methyl-2-pyrrolidone solvent to prepare solutions.

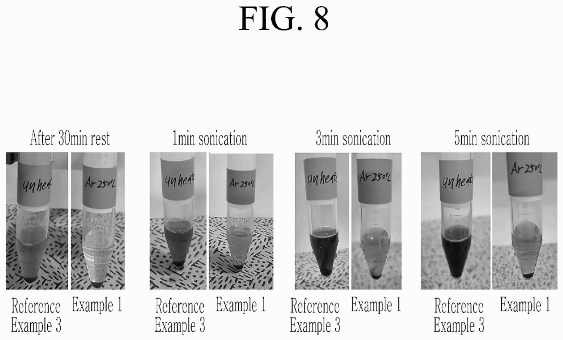

FIG. 8 shows a photograph of the adhesive force of the carbon nanotube to the positive electrode active materials which were extracted from the positive electrodes of Example 1 and Reference Example 3. FIG. 8 shows, from the left hand side in order, a test with no ultrasonication (after 30 min rest), a test with 1 minute ultrasonication, 3 minutes ultrasonication, and 5 minute ultrasonication. In each test, a sample was prepared by adding the positive electrode active material extracted from the positive electrode of Reference Example 3 to an N-methyl-2-pyrrolidone solvent, and a sample was prepared by adding the positive electrode active material extracted from the positive electrode of Example 1 in an N-methyl-2-pyrrolidone solvent.

Referring to FIG. 8, the positive electrode active material subjected to heat treatment according to Example 1 had the carbon nanotube strongly adhered to its surface, such that the carbon nanotubes were not separated even under ultrasonic processor. In contrast, the positive electrode active material without heat treatment according to Reference Example 3 showed that the carbon nanotubes were further separated over time using the ultrasonic processor, gradually turned black.

### Evaluation Example 4: Evaluation of Cycle-life of Rechargeable Lithium Battery Cell

The rechargeable lithium battery cells according to Example 1, Reference Example 3, Comparative Examples 1, and 2 were evaluated with respect to cycle-life.

The rechargeable lithium battery cells were charged to 4.3 V at a constant current of 0.1 C and continuously charged to a current of 0.05 C, while maintaining a constant voltage of 4.3 V at 25 °C. The rechargeable lithium battery cells were discharged to 3 V at 0.1 C, and the charging and discharging cycle was repeated twice.

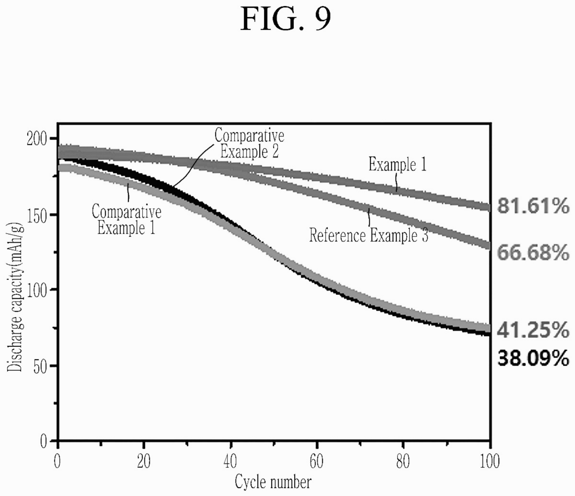

The charging and discharging cycle was repeatedly performed 100 times by changing the current alone to 1 C under the same condition, and measuring the discharging capacity retention, to evaluate cycle-life, and the results are shown in FIG. 9.

Referring to FIG. 9, compared to Reference Example 3 using carbon nanotube, Comparative Example 2, using Super P, exhibited a rapid discharge capacity reduction as the cycles progressed (38.09%). Although the contents of carbon nanotubes and Super P were identical, the conductive network could not be sufficiently maintained during cycling when Super P was used as the conductive material, leading to a rapid decrease in capacity. That is, when Super P is used as the conductive material, a larger amount of Super P is required to achieve a conductive network equivalent to that formed by carbon nanotubes. Consequently, Reference Example 3, which used the carbon nanotube in the same amount as that of Super P of Comparative Example 2, exhibited improved cycle-life characteristics by equal to or greater than about 25% based on 100 cycles compared with Comparative Example 2 using the same content of Super P, which is presumed to be because carbon nanotubes can form a stable conductive network even at a lower content than Super P.

Even under the condition of heat treatment, Comparative Example 1, which used Super P as the conductive material, exhibited a rapid discharge capacity reduction as the cycles progressed (41.25%). This is presumably because the content of Super P was too low, leading to rapid degradation, and also because ethyl cellulose, a cellulose-based additive, was not included, preventing the heat treatment from effectively enhancing the adhesion of the conductive material.

On the other hand, Example 1 (81.61%), in which a heat treatment was performed, compared to Reference Example 3 (66.68%) in which the heat treatment was not performed, showed that cycle-life characteristics were improved by about 15%. This is presumed to be because, when carbon nanotubes are used as the conductive material, heat treatment causes the carbon nanotubes to adhere more strongly to the surface of the positive electrode active material, thereby maintaining a stable conductive network even as cycling proceeds.

While the present disclosure has been described in connection with what is presently considered to be practical embodiments, it is to be understood that the present disclosure is not limited to the disclosed embodiments, but, on the contrary, is intended to cover various modifications and equivalent arrangements included within the spirit and scope of the present disclosure.

### <Description of Notable Reference Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode slurry composition, comprising:
a positive electrode active material comprising secondary particles of a lithium nickel-based composite oxide;
carbon nanotubes; and
a cellulose-based additive.

2. The positive electrode slurry composition as claimed in claim 1, wherein the lithium nickel-based composite oxide is represented by Chemical Formula 1:
[Chemical Formula 1] Liₐ₁Niₓ₁M¹_{y1}M²_{z1}O_{2-b1}X_{b1}
wherein, 0.9≤a1≤1.2, 0.8≤x1<1, 0<y1≤0.2, 0≤z1≤0.2, 0.9≤x1+y1+z1≤1.1, and 0≤b1≤0.1,
wherein M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and
wherein X is one or more elements selected from F, P, and S.

3. The positive electrode slurry composition as claimed in claim 1 or 2, wherein the lithium nickel-based composite oxide has a nickel content equal to or greater than 80 mol% based on 100 mol% of a total metal other than lithium.

4. The positive electrode slurry composition as claimed in any of the preceding claims, wherein a plurality of primary particles are agglomerated in the secondary particles and an average particle (D₅₀) of the secondary particles is 2 µm to 20 µm, and
wherein an average particle diameter (D₅₀) of the primary particles is less than or equal to 6 µm.

5. The positive electrode slurry composition as claimed in any of the preceding claims,
wherein the carbon nanotubes comprise single-walled carbon nanotubes, multi-walled carbon nanotubes, or a combination thereof; and/or
wherein an average diameter of the carbon nanotubes is 0.8 nm to 100 nm, and wherein an average aspect ratio of the carbon nanotubes is 100 to 500,000.

6. The positive electrode slurry composition as claimed in any of the preceding claims, wherein the cellulose-based additive comprises ethyl cellulose, cellulose acetate, carboxylmethyl cellulose, hydroxypropyl cellulose, methyl cellulose, nitrocellulose, or a combination thereof.

7. The positive electrode slurry composition as claimed in any of the preceding claims, wherein a content of the lithium nickel-based composite oxide is 90 wt% to 99 wt% based on 100 wt% of a total solid content of the positive electrode slurry composition,
wherein a content of the carbon nanotubes is 0.1 wt% to 5 wt% based on 100 wt% of the total solid content of the positive electrode slurry composition, and
wherein a content of the cellulose-based additive is 0.01 wt% to 5 wt% based on 100 wt% of the total solid content of the positive electrode slurry composition.

8. The positive electrode slurry composition as claimed in any of the preceding claims, wherein a weight ratio of the carbon nanotubes to the cellulose-based additive is 10:1 to 1:5.

9. The positive electrode slurry composition as claimed in any of the preceding claims, further comprising a binder, a conductive material, or a combination thereof.

10. A positive electrode, comprising:
a positive electrode current collector; and
a positive electrode active material layer disposed on the positive electrode current collector and comprising:
a positive electrode active material comprising secondary particles of a lithium nickel-based composite oxide; carbon nanotubes; and
a cellulose derivative, amorphous carbon, or a combination thereof,
optionally wherein the positive electrode is prepared by a method of claims 11-14.

11. A method of manufacturing a positive electrode, comprising:
preparing a positive electrode slurry composition comprising a positive electrode active material comprising secondary particles of a lithium nickel-based composite oxide, carbon nanotubes, and a cellulose-based additive;
coating the positive electrode slurry composition onto a positive electrode current collector and drying the positive electrode slurry composition; and
performing heat treatment.

12. The method as claimed in claim 11, wherein the preparing the positive electrode slurry composition comprises one or more selected from:
i) mixing the secondary particles of the lithium nickel-based composite oxide, the carbon nanotubes, and the cellulose-based additive in a solvent;
ii) adding the carbon nanotubes and the cellulose-based additive in a solvent to form a pre-dispersion, and
adding the pre-dispersion to a slurry comprising the secondary particles of the lithium nickel-based composite oxide.

13. The method as claimed in claim 11 or 12, wherein the drying is performed at a temperature of about 60 °C to about 160 °C.

14. The method as claimed in any of claims 11-13, wherein
i) the heat treatment is performed at a temperature of 180 °C to 300 °C; and/or
ii) the heat treatment is performed for 10 to 60 minutes; and/or
iii) the heat treatment is performed under vacuum or under an atmosphere comprising a gas, preferably wherein the gas comprises oxygen, argon, air, or nitrogen.

15. A rechargeable lithium battery, comprising:
the positive electrode as claimed in claim 10;
a negative electrode; and
an electrolyte.
